# EUROPÄISCHE PATENTSCHRIFT

(11) **EP 4 204 204 B1**
(45) Veröffentlichungstag und Bekanntmachung des Hinweises auf die Patenterteilung: **03.04.2024**
(21) Anmeldenummer: 21758585.0
(22) Anmeldetag: 11.08.2021
(51) Int. Cl.: B29C 53/04, B29C 70/34, B29C 70/46, B29C 70/54, B29C 43/36, B29L 31/00

(54) **VERFAHREN UND VORRICHTUNG ZUM HERSTELLEN EINES VERSTEIFUNGSPROFILS**
METHOD AND DEVICE FOR PRODUCING A REINFORCING PROFILE
PROCÉDÉ ET DISPOSITIF DE PRODUCTION D'UN PROFILÉ DE RENFORCEMENT

(30) Priorität: 28.08.2020 AT 507282020
(43) Veröffentlichungstag der Anmeldung: 05.07.2023
(73) Patentinhaber: GFM GmbH, 4403 Steyr (AT)
(72) Erfinder: AHRER, Rudolf, 4460 Losenstein (AT)
(74) Vertreter: Hübscher & Partner Patentanwälte GmbH
(86) Internationale Anmeldenummer: PCT/AT2021/060280
(87) Internationale Veröffentlichungsnummer: WO 2022/040708

(56) Entgegenhaltungen:
- EP-A2- 1 481 790
- GB-A- 2 567 699
- US-A1- 2018 162 020
- US-A1- 2019 070 772

## Beschreibung

Die Erfindung bezieht sich auf ein Verfahren zum Herstellen eines Versteifungsprofils aus wenigstens einer aus einer vorimprägnierten Faserbahn geschnittenen Lage, die auf einen die Profilform bestimmenden Formkern aufgelegt, im Auflagebereich am Formkern festgehalten und ausgehend von diesem Auflagebereich quer zur Profillängsrichtung fortschreitend bis zu den Profillängsrändern an den Formkern angedrückt wird, sowie auf eine Vorrichtung zur Durchführung des Verfahrens.

Insbesondere in der Flugzeugindustrie werden Versteifungsprofile aus einem Faserverbund eingesetzt, die entlang einer gekrümmte Fläche verlaufen. Dies bedeutet, dass die zum lageweisen Aufbau eines solchen Versteifungsprofils benötigten, aus einer vorimprägnierten Faserbahn ausgeschnittenen Lagen nicht nur entsprechend dem Profilquerschnitt quer zur Profillängsrichtung geformt werden, sondern auch einer Raumkurve in Profillängsrichtung folgen müssen. Zu diesem Zweck wird ein die Profilform vorgebender, in Längsrichtung der räumlichen Sollkurve folgender Formkern verwendet, an den die einzelnen Lagen des herzustellenden Versteifungsprofils formgebend angedrückt werden. Dabei sind die mechanischen Eigenschaften des Versteifungsprofils beeinträchtigende Faltenbildungen und Hohlräume zu vermeiden, was häufig zu einem aufwendigen händischen Verlegen der einzelnen Lagen unter einem formgebenden Andrücken an den Formkern führt.

Zur maschinellen Fertigung mehrlagiger Versteifungsprofile aus einem Faserverbund wurde bereits vorgeschlagen (WO 2010/100386 A2), die einzelnen von einer Vorratsspule abgezogenen, die späteren Lagen bildenden Faserbahnen mithilfe von Rollen fortlaufend an einen kontinuierlich gegenüber den Rollen geförderten Formkern anzudrücken, wobei durch die sowohl in Längsrichtung des Formkerns als auch quer dazu gegeneinander versetzten Rollen die einzelnen Faserbahnen zunächst in einem Auflagebereich am Formkern festgehalten und ausgehend von diesem Auflagebereich quer zur Profillängsrichtung fortschreitend bis zu den Profillängsrändern an den Formkern angedrückt werden, und zwar mithilfe der in Vorschubrichtung des Formkerns mit Abstand aufeinanderfolgenden Rollen, die den einzelnen Formflächen und den Übergängen zwischen den Formflächen zugeordnet sind. Nachteilig ist allerdings, dass die Faserbahnen vor den unter einem Anpressdruck abrollenden Rollen wellenartig angestaut werden, was insbesondere zur Faltenbildung Anlass gibt.

Um diesen Nachteil zu vermeiden, ist es bekannt (US 2016/0354982 A1), die einzelnen aus einer vorimprägnierten Faserbahn ausgeschnittenen Lagen nacheinander auf den Formkern bzw. auf die zuletzt auf den Formkern aufgebrachte Lage aufzulegen und in dieser Stellung mithilfe von Niederhaltern gegenüber dem Formkern festzuhalten, bevor die Lagen ausgehend vom festgehaltenen Auflagebereich quer zur Profillängsrichtung fortschreitend bis zu den Profillängsrändern formgebend an den Formkern angedrückt werden, und zwar mit einer Formeinrichtung, die bei einer üblicherweise weitgehend symmetrischen Profilform zu beiden Seiten des mittigen Auflagebereichs auf die einzelnen Lagen einwirkende Formwerkzeuge aufweist, die bei ihrer Beaufschlagung die Lagen zunächst im Anschluss an den Auflagebereich an den Formkern andrücken und dann quer zur Längsachse des Formkerns unter einer entsprechenden Druckanwendung entlang der Lagen bis zu deren Längsränder gleiten. Das dadurch bedingte Ausstreifen der Lagen entlang der Formflächen des Formkerns quer zur Profillängsrichtung soll eine faltenfreie Formung der einzelnen Lagen sichern, was jedoch nur durch eine zusätzliche Unterdruckbeaufschlagung der Lagen gelingt. Da die einzelnen Lagen über ihre gesamte Länge in einem Arbeitsvorgang an den Formkern angedrückt werden, müssen sich die Formwerkzeuge über die gesamte Profillänge erstrecken, wobei zu berücksichtigen ist, dass aufgrund eines Verlaufs des Formkerns entlang einer Raumkurve die Formwerkzeuge die dadurch bedingten Verläufe der Formflächen mitmachen müssen. Für den Fall, dass die Formwerkzeuge zwei elastisch auseinanderspreizbare, durch Randschlitze in Formfinger unterteilte Stege aufweist, die beidseits des Auflagebereichs die jeweilige Lage beaufschlagen, wird dieser Ausgleich durch die in einem bestimmten Bereich je für sich verformbaren Finger sichergestellt, allerdings mit dem Nachteil, dass über diese Finger keine vorgegebene Verdichtung der Lagen bzw. des Versteifungsprofils erreicht werden kann.

Um zur Herstellung von Profilen aus einer vorimprägnierten Faserbahn, die auf einen die Profilform bestimmenden Formkern aufgelegt und im Auflagebereich am Formkern festgehalten werden, die Faserbahn ausgehend von diesem Auflagebereich quer zur Profillängsrichtung fortschreitend an den Formkern anzudrücken, können in Profillängsrichtung verlaufende Rollen (US 2019/0070772 A1) oder an den Formkern anstellbare Formbacken (GB 2 567 699 A, US 2018/0162020 A1) eingesetzt werden. Diese Formwerkzeuge erstrecken sich jedoch jeweils über die Länge des herzustellenden Profils.

Um Versteifungsprofile aus in mehreren Lagen an einem Formkern anliegenden, vorimprägnierten Faserbahnen mithilfe von Ultraschall zumindest teilweise auszuhärten, ist es außerdem bekannt (EP 2 873 517 A1), schwimmend gelagerte Sonotroden in einer überlappenden Umfangsverteilung an die Profilflächen anzudrücken und den Formkern mit den anliegenden Faserbahnen gegenüber den Sonotroden in Profillängsrichtung zu verlagern. Durch eine Druckbeaufschlagung der Sonotroden können die aufeinanderliegenden Faserbahnen zusätzlich gemeinsam verdichtet werden. Abgesehen davon, dass von bereits faltenfrei am Formkern anliegenden Faserbahnen ausgegangen wird, ergibt sich zufolge der Relativbewegung zwischen den Sonotroden und den Faserbahnen in Profillängsrichtung die Gefahr, dass sich die Faserbahnen gegeneinander verschieben und vor den Sonotroden anstauen, insbesondere mit zunehmendem Anstelldruck der Sonotroden. Eine aus diesem Grund zwischen den Sonotroden und dem Versteifungsprofil geführte Pufferfolie kann diese Gefahr jedoch nur verkleinern, nicht aber ausschließen, wie dies auch für Gleitbeläge an den Sonotroden gilt.

Um Profilstäbe durch ein Biegen einer mehrlagigen, mit Harz getränkten Faserbahn zu formen, ist es außerdem bekannt (EP 1 481 790 A2), die Faserbahn mithilfe eines Stempels in den Spalt zwischen zwei Seitenpressen einzuführen, um die dabei gefaltete Faserbahn nach dem Herausziehen des Stempels im Bereich der durch das Falten einander gegenüberliegenden Faserbahnabschnitte durch die Seitenpressen zu einem Profilsteg zusammenzupressen. Obwohl sich beim Eintauchen des Stempels zwischen die beabstandeten Seitenpressen die Faserbahn an den Stempel anlegt, bildet der zur Formung des Profilstabs zwischen den Seitenpressen aus dem Spalt zwischen den Seitenpressen herauszuziehende Stempel keinen die Profilform bildenden Formkern. Außerdem müssen sich die Seitenpressen und der Stempel über die Länge des zu formenden Profilstabs erstrecken.

Der Erfindung liegt somit die Aufgabe zugrunde, ein Verfahren anzugeben, mit dessen Hilfe die Faserbahn der zumindest einen Lage des zu formenden Versteifungsprofils faltenfrei an einen Formkern angedrückt und unter einer vorgegebenen Druckanwendung verdichtet werden kann, und zwar fortschreitend in Profillängsrichtung.

Ausgehend von einem Verfahren der eingangs geschilderten Art löst die Erfindung die gestellte Aufgabe dadurch, dass die Lage mithilfe von sowohl in Umfangsrichtung als auch in Längsrichtung des Formkerns gegeneinander versetzt angeordneten, in Richtung auf die Formflächen des Formkerns beaufschlagbaren Formstempeln an den Formkern in dessen Längsrichtung schrittweise fortschreitend formgebend angedrückt wird.

Da die Formstempel zufolge dieser Maßnahmen zwischen den formgebenden Arbeitshüben vom jeweils durch die Formstempel geformten, am Formkern anliegenden Abschnitt der Lage abgehoben und gegenüber der auf dem Formkern aufliegenden Lage für einen neuen Verformungsschritt um einen Förderschritt in Längsrichtung des Formkerns verlagert werden, wird diese Lage unter Vermeidung einer zur Faltenbildung anlassgebenden Relativbewegung zwischen Formkern und Formeinrichtung schrittweise an den Formkern angedrückt, sodass diese Faserlage ausgehend vom festgehaltenen Auflagebereich quer zur Profillängsrichtung fortschreitend bis zu den Profillängsrändern an den Formkern formgebend angedrückt wird, und zwar aufgrund der gegenseitigen Versetzung der Formstempel und der Förderschritte fortschreitend in Profillängsrichtung. Da es darauf ankommt, eine Relativbewegung der Formstempel gegenüber dem Formkern in Profillängsrichtung während der Verformung zu unterbinden, kann beispielsweise der Formkern zwischen den Förderschritten stillgesetzt werden. Es ist aber auch möglich, die Formeinrichtung während der Formstempelbeaufschlagung mit dem Formkern synchron mitzubewegen, was eine kontinuierliche Förderung des Formkerns erlaubt. Für eine kontinuierliche Formkernförderung genügt es auch, die Formstempel mit einer in Profillängsrichtung elastisch nachgiebigen Auflage zu versehen, die die Relativbewegung zwischen der mit dem Formkern bewegten Lage und den in der ortsfest gehaltenen Formeinrichtung gelagerten Formstempeln während der Arbeitshübe ausgleicht. Die dabei unvermeidbaren Schubbelastungen der Faserbahn führen zu keinen unzulässigen Unregelmäßigkeiten im Lagenverlauf, weil sich dadurch bedingte, allfällige Längsverzüge der Lage aufgrund der Freigabe der Lage zwischen den Arbeitshüben durch die Eigenelastizität der die Lage bildenden Faserbahn rückstellen. Wegen des Wegfallens der Relativbewegung zwischen dem Formkern und den Formstempeln in Profillängsrichtung während der Verformung der Faserbahn werden die mit einer solchen Relativbewegung einhergehenden Nachteile vermieden, was eine entlang des Formkerns fortschreitende Formung der Faserbahnlage ohne Gefahr einer Faltenbildung oder eines Verzugs der Faserbahn auch bei höheren Anpressdrücken erlaubt.

Zum Herstellen eines mehrlagigen Versteifungsprofils wird mit Ausnahme der ersten unmittelbar formgebend an den Formkern angedrückten Lage jede weitere aus einer vorimprägnierten Faserbahn geschnittene Lage in analoger Weise auf die zuvor geformte Lage aufgelegt, im Auflagebereich festgehalten und dann vom Auflagebereich fortschreitend bis zum Profillängsrand mithilfe der sowohl in Umfangsrichtung als auch in Längsrichtung des Formkerns gegeneinander versetzt angeordneten Formstempeln schrittweise an die zuvor geformte Lage formgebend angedrückt. Die einzelnen Lagen können dabei je für sich bei ihrer Formgebung verdichtet werden. Eine über die Länge der Lagen gleichmäßige Verdichtung setzt voraus, dass die Länge der Förderschritte an die Länge der Formstempel angepasst wird, damit die Formstempel nach jedem Förderschritt den unmittelbar an den vorausgehend verformten Längsabschnitt anschließenden Bereich der Lagen verformen bzw. sich die Verformungsbereiche überlappen.

Zum Herstellen eines Versteifungsprofils aus mehreren aus einer vorimprägnierten Faserbahn geschnittenen Lagen kann von einer Vorrichtung mit einem die Profilform bestimmenden Formkern, mit die Lagen auf einem Auflagebereich des Formkerns festhaltenden Niederhaltern und mit einer Formeinrichtung zum formgebenden Andrücken der Lagen an die Formflächen des Formkerns ausgegangen werden. Weist die Formeinrichtung in Richtung auf die Formflächen des Formkerns beaufschlagbare, sowohl in Längsrichtung des Formkerns als auch in dessen Umfangsrichtung gegeneinander versetzt angeordnete Formstempel auf, so sind die konstruktiven Voraussetzungen zum schrittweise fortschreitenden Andrücken der einzelnen Faserbahnlagen an den Formkern bzw. an die zuletzt auf den Formkern aufgebrachte Faserbahnlage gegeben, wenn die Formeinrichtung und der Formkern relativ gegeneinander in Längsrichtung des Formkerns schrittweise verlagerbar sind.

Wird die Schrittlänge der gegenseitigen relativen Verlagerung der Formeinrichtung und des Formkerns gleich oder kleiner der in Längsrichtung des Formkerns gemessenen Länge der Formstempel gewählt, so kommen die einzelnen Formstempel jeweils in einer abstandslosen Aufeinanderfolge oder in überlappenden Längsabschnitten der Faserbahnlage zum Einsatz, sodass nach einer Anzahl von Förderschritten, die für einen Vorschub der Faserbahnlage entsprechend der Länge der Formeinrichtung erforderlich ist, die Faserbahn örtlich zu der durch den Formkern bestimmten Profilform verformt wird. Mit jedem weiteren Förderschritt verlängert sich der vollständig an den Formkern bzw. an die zuletzt aufgebrachte Faserbahnlage angedrückte und damit fertig verformte Längsabschnitt der Faserbahnlage.

Um die Formeinrichtung für unterschiedliche Profilformen einfach umrüsten zu können, können die gegebenenfalls auswechselbaren Formstempel je für sich auf einem quer zur Längsrichtung des Formkerns verlagerbaren Schlitten um eine in Längsrichtung des Formkerns verlaufende Achse schwenkbar gelagert werden. Damit ist es möglich, die Formstempel in ihrem Abstand und in ihrer Ausrichtung an die jeweilige Profilform des herzustellenden Versteifungsprofils anzupassen. Besonders einfache Konstruktionsbedingungen ergeben sich in diesem Zusammenhang, wenn die Formstempel mit Stellzylindern eine auf den Schlitten schwenkbar gelagerte Baueinheit bilden.

Die Niederhalter werden vorteilhaft der Formeinrichtung zugeordnet, was jedoch nicht zwingend ist.

### Kurze Beschreibung der Erfindung

Anhand der Zeichnung wird das erfindungsgemäße Verfahren näher erläutert. Es zeigen
- Fig. 1: eine erfindungsgemäße Vorrichtung mit einer Formeinrichtung zum Herstellen eines Versteifungsprofils in einem Schnitt quer durch den Formkern,

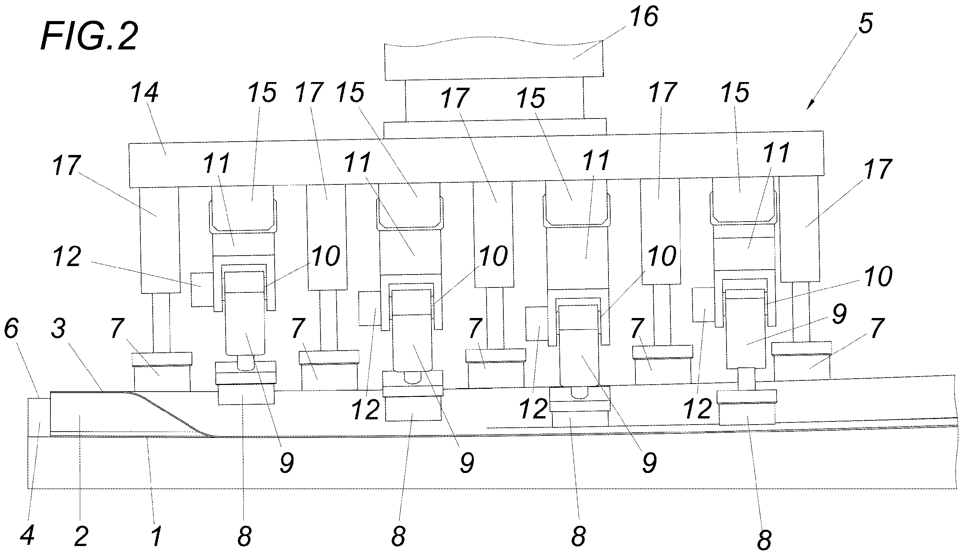

- Fig. 2: diese Vorrichtung in einer Seitenansicht in Richtung des Pfeils II und
- Fig. 3: eine Draufsicht auf den Formkern im Bereich der Formeinrichtung, von der jedoch lediglich die beaufschlagbaren Formstempel in ihrer Verteilung angedeutet sind.

Die dargestellte Vorrichtung zum Herstellen eines Versteifungsprofils aus üblicherweise mehreren Lagen 1, 2, 3, im Ausführungsbeispiel eine Trägerlage 2 und zwei Decklagen 1 und 3, weist einen die Profilform, z. B. ein Hutprofil, und den Längsverlauf des Profils bestimmenden Formkern 4 auf, an dessen Formflächen die aus vorimprägnierten Faserbahnen geschnittenen Lagen 1, 2, 3 nacheinander formgebend angedrückt werden, und zwar mithilfe einer Formeinrichtung 5. Diese Formeinrichtung 5 umfasst einerseits die Lagen 1, 2, 3 auf einem Auflagebereich 6 des Formkerns 4 festhaltende Niederhalter 7 und anderseits Formstempel 8, die gegenüber den Formflächen des Formkerns 4 ausgerichtet sind und durch Stelltriebe 9 beaufschlagt werden. Die Formstempel 8 sind sowohl in Längsrichtung des Formkerns 4 als auch in dessen Umfangsrichtung gegeneinander versetzt angeordnet, um die Lagen 1, 2, 3 schrittweise nacheinander formgebend an den Formkern 4 bzw. die zuletzt aufgebrachte Lage 1, 2 andrücken zu können. Wegen der weitgehenden Profilsymmetrie sind die Formstempel 8 beidseits des Auflagebereichs 6 paarweise angeordnet. Um ein selbständiges Ausrichten der Formstempel 8 gegenüber den Formflächen des Formkerns 4 zu erreichen, können die Formstempel 8 begrenzt frei verschwenkbar gelagert sein oder eine elastisch nachgiebige Auflage aufweisen.

Die Stelltriebe 9 sind bevorzugt als mit den Formstempeln 8 eine Baueinheit bildenden Stellzylindern ausgeführt, die um eine in Längsrichtung des Formkerns 4 gebildete Achse 10 verschwenkbar in einem Schlitten 11 gelagert und mittels eines Schwenktriebs 12 schwenkverstellbar sind. Die Schlitten 11 selbst sind auf quer zur Längsrichtung des Formkerns 4 verlaufenden Führungen 13 in einem Gestell 14 verschiebbar geführt und können durch Antriebe 15 entlang der Führungen 13 verstellt werden. Über einen Gelenkkopf 16, beispielsweise eines Manipulators, kann die Formeinrichtung 5 gegenüber dem Längsverlauf des Formkerns 4 ausgerichtet werden, um entweder entlang des ruhenden Formkerns 4 verlagert oder gegenüber dem in Längsrichtung verlagerbaren Formkern 4 ruhend festgehalten zu werden.

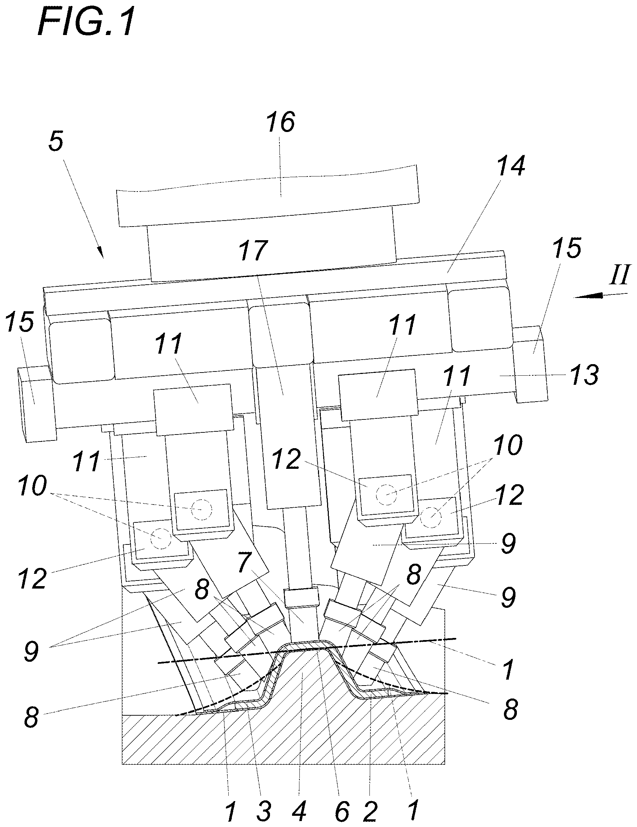

Zur Herstellung eines Versteifungsprofils wird nach der Ausrichtung der Formeinrichtung 5 gegenüber dem Formkern 4 und einer Ausrichtung der Formstempel 8 gegenüber den Formflächen des Formkerns 4 die erste Lage 1 auf den Auflagebereich 6 des Formkerns 4 ausgerichtet aufgelegt und mittels der Niederhalter 7 gegenüber dem Formkern 4 festgehalten, indem die Stelltriebe 17 für die Niederhalter 7 entsprechend angesteuert werden. Wird in dieser Ausgangslage das in Umfangsrichtung des Formkerns 4 an den Auflagebereich 6 anschließende Paar der Formstempel 8 angesteuert, so drücken die durch die Stelltriebe 9 beaufschlagten Formstempel 8 die Lage 1 an den Formkern 4 im Übergangsbereich vom Boden zu den Seitenwänden des Hutprofils an, wobei die Lage 1 aus der in Fig. 1 strichpunktiert angedeuteten Ausgangslage in einem ersten Verformungsschritt in die um die diesen Übergangsbereich bestimmende Längskante des Formkerns 4 in eine strichliert angedeutete Zwischenlage gebogen wird.

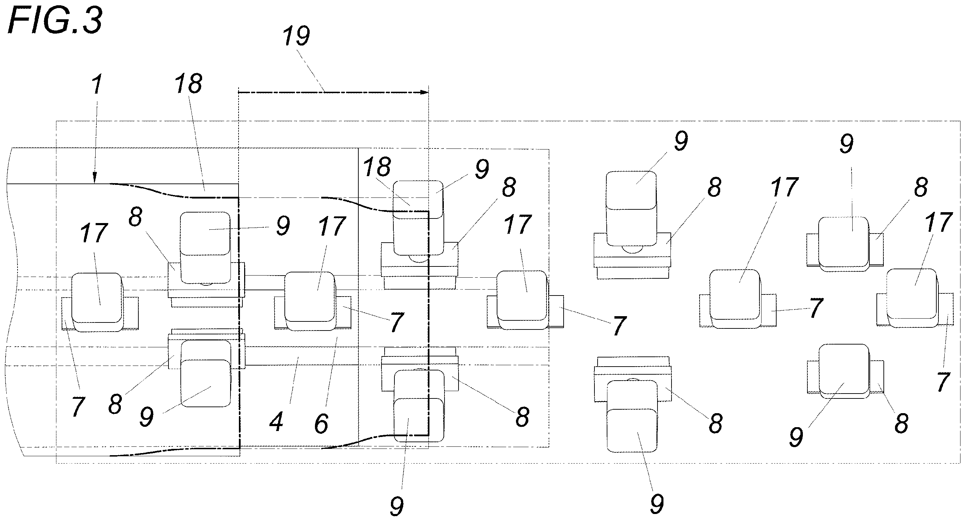

In der Fig. 3 ist das in die Formeinrichtung 5 eingeführte, im Bereich des ersten Paars der Formstempel 8 befindliche, noch nicht verformte Einlaufende 18 der ersten Lage 1 in vollen Linien dargestellt. Die Verformung des mithilfe der Niederhalter 7 auf dem Auflagebereich 6 festgehaltenen Einlaufendes 18 durch das erste Paar der Formstempel 8 ist strichpunktiert angedeutet. Mit jedem Förderschritt wird der Formkern 4 mit der ersten Lage 1 bei abgehobenen Niederhaltern 7 und Formstempeln 8 um eine Länge verlagert, die kleiner als die in Profillängsrichtung gemessene Länge der Formstempel 8 gewählt wird, um die Lage 1 nach jedem Förderschritt durch das erste Formstempelpaar zu verformen, sodass die Lage 1 im Bereich des durch das erste Formstempelpaar bestimmten Umfangsabschnitts über ihre Länge durchgehend unter einer entsprechenden Druckanwendung in aufeinanderfolgenden Verformungsschritten verformt wird.

Gemäß dem dargestellten Ausführungsbeispiel gelangt das durch das erste Formstempelpaar um die Längskante des Formkerns 4 zwischen dem Boden und den Seitenwänden des Hutprofils gebogene Einlaufende 18 nach drei dem Pfeil 19 entsprechenden Förderschritten in den Bereich des zweiten Paars der Formstempel 8, wie dies in dünnen strichpunktierten Linien dargestellt ist. In dieser Einlaufstellung kann das Einlaufende 18 mithilfe des zweiten Formstempelpaars in einem zweiten Verformungsschritt an die Seitenwände des durch den Formkern 4 bestimmten Hutprofils angedrückt werden, was durch die dickere strichpunktierte Umrissform des Einlaufendes 18 angedeutet ist.

Aufgrund der gleichmäßigen Abstände der Formstempelpaare voneinander in Profillängsrichtung kommen jeweils nach drei weiteren Förderschritten ein weiteres Paar der Formstempel 8 der über den Umfang des Formkerns 4 versetzt angeordneten Formstempelpaare zum Einsatz, bis mit dem den Formvorgang beendenden letzten Formstempelpaar die erste Lage 1 am Ausgang der Formeinrichtung 5 die durch den Formkern 4 vorgegebene Profilform aufweist.

Mit jedem weiteren Förderschritt verlängert sich der vollständig geformte Längsabschnitt der ersten Lage 1, bis nach einem vollständigen Durchlauf auf die formbildend an den Formflächen des Formkerns 4 anliegende erste Lage 1 eine zweite Lage 2 in analoger Weise aufgebracht werden kann. Das Lagenaufbringen wird bis zur letzten Lage 3 wiederholt, bevor das geformte Versteifungsprofil vom Formkern 4 gegebenenfalls nach einer zumindest teilweisen Härtung der vorimprägnierten Faserbahnen vom Formkern 4 abgenommen werden kann.

Aufgrund der mit dem Andrücken der einzelnen Lagen 1, 2, 3 an den Formkern 4 bzw. an die zuletzt aufgebrachte Lage 1, 2 verbundenen Druckbeaufschlagung der Lagen 1, 2, 3 durch die Niederhalter 7 und die Formstempel 8 können die einzelnen Lagen 1, 2, 3 entsprechend den jeweiligen Anforderungen verdichtet werden, wobei über die Anstellung der Stelltriebe 9 bzw. 17 die Dicke der jeweiligen Lagen erfasst werden kann. Um die Verdichtungswirkung zu steigern, können die Niederhalter 7 und die Formstempel 8 durch Schwingungsantriebe beaufschlagt werden.

## Patentansprüche

1. Verfahren zum Herstellen eines Versteifungsprofils aus wenigstens einer aus einer vorimprägnierten Faserbahn geschnittenen Lage (1), die auf einen die Profilform bestimmenden Formkern (4) aufgelegt, im Auflagebereich (6) am Formkern (4) festgehalten und ausgehend von diesem Auflagebereich (6) quer zur Profillängsrichtung fortschreitend bis zu den Profillängsrändern an den Formkern (4) angedrückt wird, wobei die Lage (1) mithilfe von sowohl in Umfangsrichtung als auch in Längsrichtung des Formkerns (4) gegeneinander versetzt angeordneten, in Richtung auf die Formflächen des Formkerns (4) beaufschlagbaren Formstempeln (8) an den Formkern (4) in dessen Längsrichtung schrittweise fortschreitend formgebend angedrückt wird.

2. Verfahren nach Anspruch 1, **dadurch gekennzeichnet, dass** zum Herstellen eines mehrlagigen Versteifungsprofils mit Ausnahme der ersten unmittelbar formgebend an den Formkern (4) angedrückten Lage (1) jede weitere aus einer vorimprägnierten Faserbahn geschnittene Lage (2, 3) in analoger Weise auf die zuvor geformte Lage (1, 2) aufgelegt, im Auflagebereich (6) festgehalten und dann vom Auflagebereich (6) fortschreitend bis zum Profillängsrand mithilfe der sowohl in Umfangsrichtung als auch in Längsrichtung des Formkerns (4) gegeneinander versetzt angeordneten Formstempeln (8) schrittweise an die zuvor geformte Lage (1, 2) formgebend angedrückt wird.

3. Vorrichtung zum Herstellen eines Versteifungsprofils aus mehreren aus einer vorimprägnierten Faserbahn geschnittenen Lagen (1, 2, 3) mit einem die Profilform bestimmenden Formkern (4), mit die Lagen (1, 2, 3) auf einem Auflagebereich (6) des Formkerns (4) festhaltenden Niederhaltern (7) und mit einer Formeinrichtung (5) zum formgebenden Andrücken der Lagen (1, 2, 3) an die Formflächen des Formkerns (4), wobei die Formeinrichtung (5) in Richtung auf die Formflächen des Formkerns (4) beaufschlagbare, sowohl in Längsrichtung des Formkerns (4) als auch in dessen Umfangsrichtung gegeneinander versetzt angeordnete Formstempel (8) aufweist und dass die Formeinrichtung (5) und der Formkern (4) relativ gegeneinander in Längsrichtung des Formkerns (4) schrittweise verlagerbar sind.

4. Vorrichtung nach Anspruch 3, **dadurch gekennzeichnet, dass** die Schrittlänge der gegenseitigen relativen Verlagerung der Formeinrichtung (5) und des Formkerns (4) höchstens der in Längsrichtung des Formkerns (4) gemessenen Länge der Formstempel (8) entspricht.

5. Vorrichtung nach Anspruch 3 oder 4, **dadurch gekennzeichnet, dass** die gegebenenfalls auswechselbaren Formstempel (8) je für sich auf einem quer zur Längsrichtung des Formkerns (4) verlagerbaren Schlitten (11) um eine in Längsrichtung des Formkerns (4) verlaufende Achse (10) schwenkbar gelagert sind.

6. Vorrichtung nach Anspruch 5, **dadurch gekennzeichnet, dass** die Formstempel (8) mit Stellzylindern eine auf den Schlitten (11) schwenkbar gelagerte Baueinheit bilden.

7. Vorrichtung nach einem der Ansprüche 1 bis 6, **dadurch gekennzeichnet, dass** die Formeinrichtung (5) die Niederhalter (7) aufweist.

## Claims

1. Method for producing a stiffening profile from at least one layer (1) cut from a pre-impregnated fiber web, which is placed on a mould core (4) determining the profile shape, is held in the support region (6) on the mould core (4) and, starting from this support region (6), is pressed progressively against the mould core (4) transversely to the longitudinal direction of the profile up to the longitudinal edges of the profile, wherein the layer (1) is pressed against the mould core (4) in its longitudinal direction in a stepwise, progressively shaping manner with the aid of moulding punches (8), which are arranged offset relative to one another both in the circumferential direction and in the longitudinal direction of the mould core (4) and can be acted upon in the direction of the mould surfaces of the mould core (4).

2. Method according to claim 1, **characterized in that**, in order to produce a multi-layer stiffening profile, with the exception of the first layer (1) pressed directly against the mould core (4) to form it, each further layer (2, 3) cut from a pre-impregnated fiber web is placed in an analogous manner on the previously formed layer (1, 2), held in place in the support area (6) and is then stepwise and progressively pressed from the support area (6) to the longitudinal edge of the profile in a shaping manner against the previously formed layer (1, 2) by means of the moulding punches (8), which are arranged offset relative to one another both in the circumferential direction and in the longitudinal direction of the mould core (4).

3. Apparatus for producing a stiffening profile from a plurality of layers (1, 2, 3) cut from a pre-impregnated fiber web with a mould core (4) determining the profile shape, with hold-down devices (7) holding the layers (1, 2, 3) on a support region (6) of the mould core (4) and with a moulding device (5) for pressing the layers (1, 2, 3) against the mould surfaces of the mould core (4) in a shaping manner, wherein the moulding device (5) has moulding punches (8) which can be acted upon in the direction of the moulding surfaces of the mould core (4) and are arranged offset relative to one another both in the longitudinal direction of the mould core (4) and in the circumferential direction thereof, and in that the moulding device (5) and the mould core (4) can be displaced relative to one another in steps in the longitudinal direction of the mould core (4).

4. Apparatus according to claim 3, **characterized in that** the step length of the mutual relative displacement of the moulding device (5) and the moulding core (4) corresponds at most to the length of the moulding punches (8) measured in the longitudinal direction of the moulding core (4).

5. Apparatus according to claim 3 or 4, **characterized in that** the optionally replaceable moulding punches (8) are each mounted separately on a carriage (11), which carriage (11) can be displaced transversely to the longitudinal direction of the moulding core (4), so as to be pivotable about an axis (10) extending in the longitudinal direction of the moulding core (4).

6. Apparatus according to claim 5, **characterized in that** the moulding punches (8) with adjusting cylinders form a structural unit pivotably mounted on the carriage (11).

7. Apparatus according to one of claims 1 to 6, **characterized in that** the moulding device (5) comprises the hold-down devices (7).

## Revendications

1. Procédé de production d'un profilé de renforcement à partir d'au moins une couche (1) qui est découpée à partir d'un voile fibreux préimprégné, qui est appliquée à une partie centrale de moule (4) déterminant la forme du profilé, qui est retenue sur la partie centrale de moule (4) dans la région d'application (6) et qui est pressée progressivement sur la partie centrale de moule (4) à partir de cette région d'application (6) transversalement à la direction longitudinale du profilé jusqu'aux bords longitudinaux du profilé, dans lequel la couche (1) est pressée progressivement par incréments pour mise en forme sur la partie centrale de moule (4), dans sa direction longitudinale, à l'aide de poinçons de moulage (8) qui sont disposés de façon décalée l'un par rapport à l'autre à la fois dans la direction circonférentielle et dans la direction longitudinale de la partie centrale de moule (4) et qui peuvent être forcés en direction des faces de moulage de la partie centrale de moule (4).

2. Procédé selon la revendication 1, **caractérisé en ce que**, pour la production d'un profilé de renforcement multicouche, à l'exception de la première couche (1) qui est pressée directement sur la partie centrale de moule (4) pour mise en forme, chaque autre couche (2, 3) qui est découpée à partir d'un voile fibreux préimprégné est appliquée de façon analogue sur la couche (1, 2), est retenue dans la région d'application (6) et est ensuite pressée progressivement sur la couche préalablement formée (1, 2), déterminant sa forme, à partir de la région d'application (6) jusqu'au bord longitudinal du profilé, à l'aide de poinçons de moulage (8) qui sont disposés de façon décalée l'un par rapport à l'autre, à la fois dans la direction circonférentielle et dans la direction longitudinale de la partie centrale de moule (4).

3. Dispositif de production d'un profilé de renforcement à partir de plusieurs couches (1, 2, 3) qui sont découpées à partir d'un voile fibreux préimprégné, comprenant une partie centrale de moule (4) qui détermine la forme du profilé, comprenant des serre-flans (7) pour retenir les couches (1, 2, 3) sur une région d'application (6) de la partie centrale de moule (4), et comprenant un dispositif de moulage (5) pour presser les couches (1, 2, 3) contre les faces de moulage de la partie centrale de moule (4) en déterminant leur forme, dans lequel le dispositif de moulage (5) comprend des poinçons de moulage (8) qui peuvent être forcés en direction des faces de moulage de la partie centrale de moule (4) et qui sont disposés de façon décalée l'un par rapport à l'autre à la fois dans la direction longitudinale de la partie centrale de moule (4) et dans la direction circonférentielle de celle-ci, et dans lequel le dispositif de moulage (5) et la partie centrale de moule (4) peuvent être déplacés graduellement l'un par rapport à l'autre dans la direction longitudinale de la partie centrale de moule (4).

4. Dispositif selon la revendication 3, **caractérisé en ce que** la longueur de pas du déplacement relatif mutuel du dispositif de moulage (5) et de la partie centrale de moule (4) correspond au maximum à la longueur des poinçons de moulage (8) qui est mesurée dans la direction longitudinale de la partie centrale de moule (4).

5. Dispositif selon la revendication 3 ou 4, **caractérisé en ce que** les poinçons de moulage (8), qui sont éventuellement interchangeables, sont montés chacun pour soi sur un chariot (11) qui peut être déplacé transversalement à la direction longitudinale de la partie centrale de moule (4), de manière à pouvoir pivoter autour d'un axe (10) qui s'étend dans la direction longitudinale de la partie centrale de moule (4).

6. Dispositif selon la revendication 5, **caractérisé en ce que** les poinçons de moulage (8) forment avec des vérins de réglage un ensemble qui est monté de façon pivotante sur les chariots (11).

7. Dispositif selon l'une quelconque des revendications 1 à 6, **caractérisé en ce que** le dispositif de moulage (5) comprend les serre-flans (7).
